# EUROPEAN PATENT APPLICATION

(11) **EP 3 002 678 A1**
(43) Date of publication of application: **06.04.2016**
(21) Application number: 15187638.0
(22) Date of filing: 30.09.2015
(51) Int. Cl.: G06F 9/44

(54) **DEVICE WITH A MULTI-LINGUAL USER INTERFACE AND METHOD FOR UPDATING THE USER INTERFACE**

(30) Priority: 01.10.2014 EP 14187370
(71) Applicant: OCE-Technologies B.V., 5914 CA Venlo (NL)
(72) Inventor: JITEA, Razvan-Adelin, 5914 CA Venlo (NL); SIMA, Adrian-Ciprian, 5914 CA Venlo (NL); NAUTA, Gadze C., 5914 CA Venlo (NL)
(74) Representative: Groen, Mark Jacobus

(57) **Abstract**

Device comprising user interfacing means for presenting a user interface comprising at least one textual widget to reproduce a text string with a preconfigured text string identifier, the device also comprising a text string storage for storing the text string; storage medium reading means for reading information stored; storage medium detection means for detecting a storage medium being inserted in or connected to the storage medium reading means; language pack presence detection means for detecting a language pack on the storage medium upon the storage medium detection means detecting a storage medium being inserted or being connected, the language pack comprising an text string, an text string identifier associated with the text string, and an language identifier associated with the text string; and text string storage update means configured to insert in the text string storage the text string and associate with the inserted text string a language identifier.

## Description

### FIELD OF THE INVENTION

The present invention generally pertains to multi-lingual user interfaces and more particular to updating languages in multi-lingual user interfaces.

The present invention relates to a device comprising user interfacing means for presenting a user interface to a user, the user interface comprising at least one textual widget arranged to reproduce a text string with a preconfigured text string identifier, the device also comprising a text string storage for storing the text string, a text string identifier associated with the text string for associating the text string with the textual widget, and a language identifier associated with the text string.

The present invention also relates to a method for updating the user interface language of a device.

The present invention also relates to a computer-program product embodied on a non-transitory computer readable medium and configured to execute such a method and a non-transitory data carrier having stored thereon such a computer-program product.

### BACKGROUND ART

Many systems are provided with user interfaces with multi-lingual capabilities. This allows a user of the system to configure his preferred language of the user interface providing him textual information in his preferred language.

For open systems, such as personal computers, and servers, users usually have the option to install additional languages by rerunning an installer for the specific software application, or sometimes by choosing a language pack download option from within the specific software application. However, this only applies to software applications. The system software and firmware usually require a more low level procedure requiring the system to be rebooted in an update mode.

For closed systems however, such as reprographical devices (copiers, printers, faxes, all-in-one office machines), the languages of the user interface are pre-installed and preconfigured in the system. In case a user wants to install additional languages, a service engineer has to come on-site to bring the system into a service mode and install additional languages. Sometimes this is only possible by installing new firmware. If the user is lucky he might have the tools to flash a new firmware himself. This often requires an external computer to be connected to the system and to open a low level communication channel between the system and the external computer. Most manufacturers do not allow end-users such access due to security and warranty reasons.

The object of the present invention is to mitigate this disadvantages.

### SUMMARY OF THE INVENTION

The object is reached by providing a device comprising user interfacing means for presenting a user interface to a user, the user interface comprising at least one textual widget arranged to reproduce a text string with a preconfigured text string identifier, the device also comprising a text string storage for storing the text string, a text string identifier associated with the text string for associating the text string with the textual widget, and a language identifier associated with the text string; the device further comprising: storage medium reading means for reading information stored on a storage medium; storage medium detection means for detecting a storage medium being inserted in or connected to the storage medium reading means; language pack presence detection means for detecting a language pack on the storage medium upon the storage medium detection means detecting a storage medium being inserted or being connected, the language pack comprising an import text string, an import text string identifier associated with the import text string, and an import language identifier associated with the import text string; and text string storage update means configured to insert in the text string storage the import text string and associate with the inserted import text string a language identifier derived from the import language identifier.

The user interface comprises one or more screens with textual widgets for presenting text to the user. The actual text strings are stored in a storage, the string repository. Depending on the user interface language configured by the user or the default language as preconfigured by the supplier, the user interface means retrieve text strings for the correct language from the string repository and place the string in the textual widget. The textual widget may be a label, text field, a combo box, a drop down box, a rich text field, etc. Any widget that reproduces textual information.

The user interface means preferably comprise program code to generate a user interface allowing a user to interact with the device. The user interface is preferably a graphical user interface. However, it may also be a purely textual user interface, a web based user interface, a speech user interface, or any other user interface outputting text in any form that can be generated or synthesised by the device. The user interface may be implemented in the operating system of the device, in an application running on top of the operating system, in any other program code running on the device, and combinations thereof.

The storage medium reading means preferably comprises program code that provides access to the data stored on a storage device. This program code may be implemented in the operating system of the device, in an application running on top of the operating system, in any other program code running on the device, and combinations thereof.

The storage medium detection means preferably comprise program code to detect that a storage medium has been inserted into the device, or alternatively that a storage device has been connected to the device. This program code is preferably implemented in the operating system of the device, but may also be implemented in an application running on top of the operating system, in any other program code running on the device, and combinations thereof

The language pack presence detection means preferably comprise program code to inspect the content of the storage medium for the presence of a language pack. This may code may rely on one or more of the following mechanisms: the media ID of the storage medium matching a predefined ID or predefined pattern, the language pack having a file name matching a predefined file name or predefined pattern, the path to the language pack matching a predefined path or predefined pattern, the format of the language pack being a predefined format, the structure of the language pack matching a predefined structure, at least part of the content of the language pack matching a predefined pattern, and the language pack being digitally signed by a predefined entity.

This program code may be implemented in the operating system of the device, in an application running on top of the operating system, in any other program code running on the device, and combinations thereof.

The text string storage update means preferably comprise program code to store text strings originating from the storage medium on the text string storage. The program code further stores a language identifier to identify the applicable language of the text strings. In an alternative embodiment, the program code also stores an text string identifier allowing the user interface to associate a text string in the text string storage with a textual widget to be reproduced. This program code may be implemented in the operating system of the device, in an application running on top of the operating system, in any other program code running on the device, and combinations thereof.

The language identifiers present in the language pack may be identical to the language identifiers present in the text string storage. Alternatively, the language identifiers used in the language packs need to be converted to other language identifiers in the text string storage. For example, language identifiers may be ISO 3166-1 three letter codes, ISO 3166-1 two letter codes, ISO 3166-1 numerical codes, or any other language code, even including proprietary ones.

This embodiment allows an operator, or even any ordinary, unprivileged user to add or update available user interface languages in the device without compromising the integrity of the device. There is no need to execute untrusted code as all code being run in the process already resides in the device. There is no need for the device to be connected to a network or even the internet.

In a preferred embodiment the invention provides a device further comprising a language configuration, the language configuration configurable by a user, and wherein the user interface means are arranged to retrieve from the text string storage a text string with a text string identifier corresponding to the preconfigured text string identifier and a language identifier corresponding to the configured language.

This allows a user to select a language that was pre-installed on the device or installed on the device in accordance with the present invention.

In a further embodiment, the present invention provides a device wherein: -he user interfacing means is configured to present in the user interface a language selection widget for selecting a language corresponding to a language identifier comprised in the language pack, upon the language pack presence detection means detecting the language pack, and upon the user selecting a language in the language selection widget, the text string storage update means insert the text strings from the language pack that have associated with them a language identifier corresponding to the language selected by the user into the text string storage. This way the user may select what languages to install, instead of installing all languages.

In an even further embodiment, a device is provided wherein the text string storage update means is configured to replace a text string in the text string storage with the import text string if the associated text string identifier and the associated language identifier of the text string correspond to the import text string identifier and the language identifier associated with the import text string. This effectively updates any pre-installed text strings in the text string storage.

In a preferred embodiment, a device is provided wherein: the text string storage is configured to store the inserted text string with information identifying the inserted text string as having been inserted, and the user interfacing means is further configured to retrieve for the textual widget, if present a text string that has been identified as having been inserted, or if such text string is not present a text string that has not been identified as having been inserted. Any pre-installed text string is no longer replaced. Instead the device defaults to using any text strings that were installed through the present invention. However, it also allows for returning to a factory state by deleting the inserted text strings, leaving the pre-installed text strings untouched and therefore still available to the user interface.

In a specific embodiment, a device is provided wherein a text string with a predetermined language identifier also represents the text string identifier. In this situation the string in for example the default language acts as the identifier. The advantage is no additional identifier needs to be stored and additionally text widgets that do not have some text string identifier associated with them may still be provided with translated text strings. However, because the complete text string in the default language needs to be reproduced in the language pack in order to associate the original text string with the translated text string, the language pack will have a bigger size.

According to one aspect of the invention a method is provided for updating the user interface language of a device, comprising: detecting a storage medium being inserted in or connected to storage medium reading means; upon detecting a storage medium being inserted or connected, accessing the storage medium and checking for the presence of a language pack;
- reading from the language pack: an import text string, an import text string identifier associated with the import text string, and a language identifier associated with the import text string; inserting in a text string storage the import text string; associating with the inserted import text string a text string identifier based on the import text string identifier associated with the import text string; associating with the inserted import text string a language identifier based on the language identifier associated with the import text string.

In a further embodiment a computer-program product is provided embodied on a non-transitory computer readable medium and configured to execute a method according to any of claims 8-13 when executed on a processor.

In another embodiment, the present invention provides a non-transitory data carrier having stored thereon the computer-program product according to claim 14.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:
- Figure 1: shows a block diagram of an architecture of a device according to the present invention;
- Figure 2: shows schematically a method according to the present invention;
- Figure 3: shows schematically a screen for a user interface in accordance with the present invention;
- Figure 4: shows schematically a further screen for the user interface of figure 3;
- Figure 5: shows schematically again a further screen for the user interface of figure 3;
- Figure 6: shows schematically another screen for the user interface of figure 3;
- Figure 7: shows schematically the screen of figure 3, but after a method according to the invention has been executed;
- Figure 8: shows a block diagram illustrating the signal flow and data flow in a method according to the present invention; and

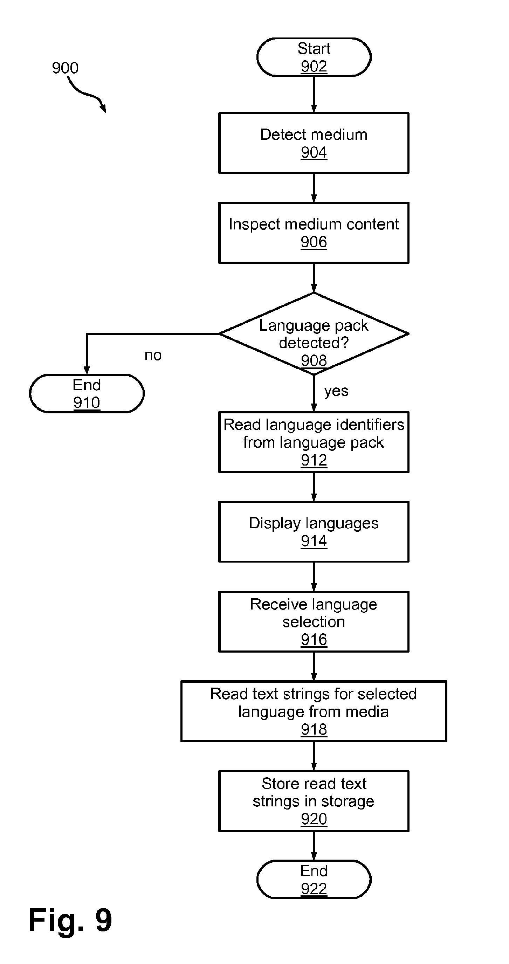

- Figure 9: shows a flow diagram illustrating a method according to the present invention.

### DETAILED DESCRIPTION OF THE DRAWINGS

The present invention will now be described with reference to the accompanying drawings, wherein the same reference numerals have been used to identify the same or similar elements throughout the several views.

In a typical embodiment of the present invention, the device is for example a reprographic device such as a copier, a scanner, a printer, an all-in-one office machine, etc. The reprographic device comprises a display 112 for presenting a user interface to a user of the reprographic device. A user input 110 allows the user to interact with the device. The user input 110 may be a keypad, a touch sensitive layer in the display 112, a mouse device, etc. The device further comprises a CPU 118 for executing different tasks, including managing jobs to be executed on the device. The CPU 118 is also responsible for generating a user interface through the display 112 and responding to input provided by the user through user input 110. The CPU 118 further runs program code to manage the configuration of the device. The CPU 118 has access to a Random Access Memory 116 for temporarily storing data. For permanent storage a persistent storage 120 is available such as a hard disk, or a solid state disk. The device also comprises a media interface 114 that allows an external storage device to be connected to the device, such as a memory stick, an optical disk, an external hard disk, etc. The components of the device described are connected to each other through a bus 122 allowing the different components to communicate with each other.

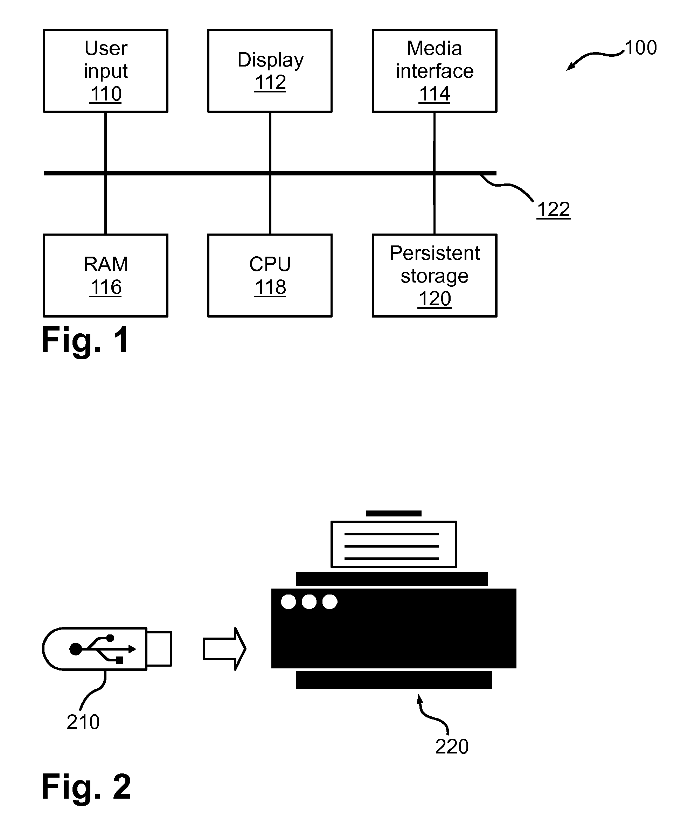

To update the reprographic device in accordance with the invention, an external storage device such as a USB memory stick 210 (figure 2) is inserted in a USB port of the reprographic device 220. THe USB port acts as the media interface 114 allowing data to be transferred from the USB memory stick 210 to the CPU 118. Alternatively, an external hard disk with a USB connector is connected to the USB port of the reprographic device 220, or the media interface 114 may comprise an optical disk station. The USB memory stick 210 has stored thereon a language pack for the reprographic device 220.

The insertion of the USB memory stick 210 is detected by the reprographic device 220 and the USB memory stick 210 is automatically mounted to allow the reprographic device 220 to access the USB memory stick 210. The reprographic device 220 automatically detects that the USB memory stick 210 contains a language pack.

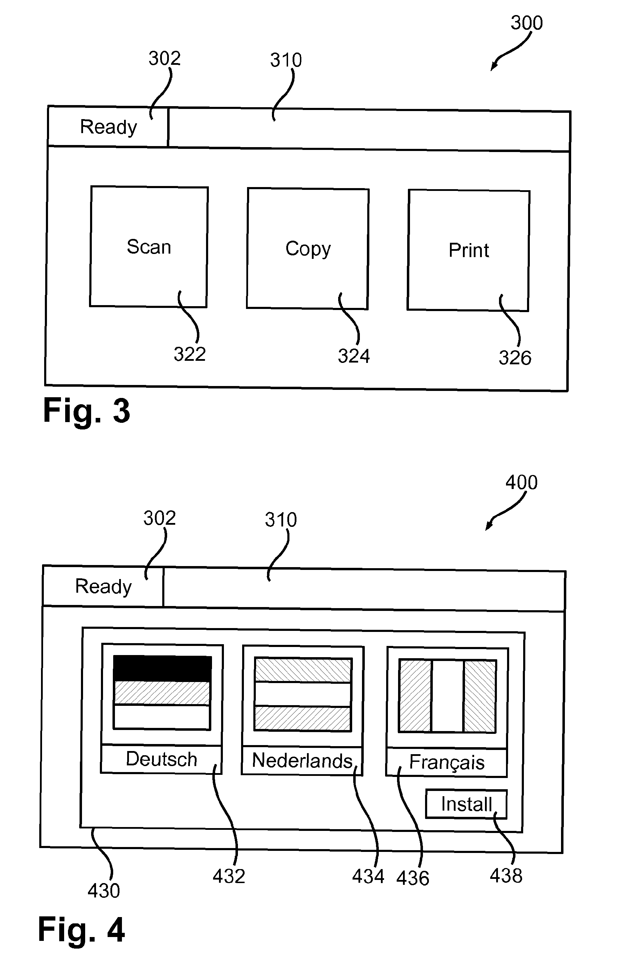

Before the USB memory stick 210 is inserted the reprographic device 220 may be in any state, for example in an idle state wherein the device 220 is waiting for instructions from a user (figure 3). The user interface shows on the display 112 a screen 300. The screen 300 comprises a status bar 310 with information pertaining to the state of the device 220. For example, a status message 302 may show a text string "Ready" to show that the device 220 is ready to accept user instructions. Furthermore, buttons 322, 324, and 326 show commands that a user may select to initiate an operation on the device 220, for example a scan operation, a copy operation, or a print operation, as indicated by the text strings "Scan", "Copy", and "Print". The screens may show some information in the form of graphical widgets. However, it also shows some information in the form of textual widgets such as a text label for the status message 302, and button labels for the buttons 322, 324, and 326. Other examples of textual widgets are menu bars, selection lists, drop down menus, etc. Basically anything in the user interface that shows textual information.

The language of the texts in these textual widgets is some initial language that may be preconfigured language set by the manufacturer of the device 220, or it may be a language configured by a user at an earlier stage.

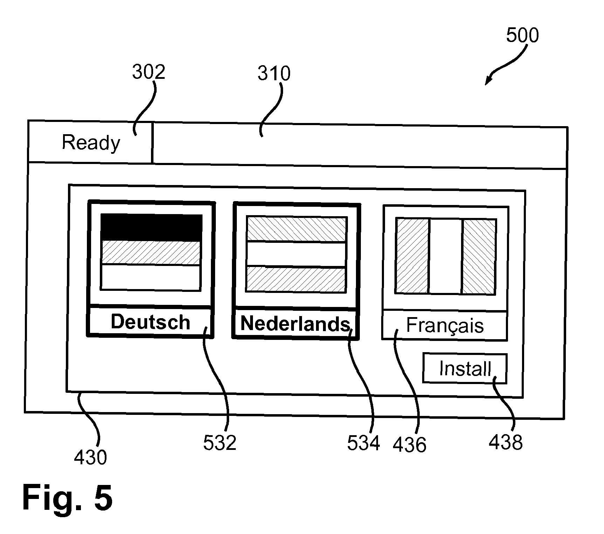

At the moment the USB memory stick 210 is inserted in the device 220, detected by the device 220, automatically mounted by the device 220, and detected as being a storage having stored thereon a language pack, the device 220 reads the available languages on the USB memory stick 210. The user interface automatically pops up a pop-up window 430 (figure 4) on the screen 400 displaying the available languages. Buttons 432, 434, and 436 allow the user to select respectively German, Dutch, and French. Multiple languages may be selected (see screen 500, figure 5). Languages selected by the user are marked in order to allow the user to get feedback on what languages he already selected. The marking is for example done by highlighting the selected buttons 532 and 534. After the user has made his selections he activates an install button 438 to indicate he has finished selecting the languages.

After the user has made his selections, the device 220 reads the text strings of the selected languages from the USB memory stick 210 and stores them in the persistent storage 120. The user interface will remove the pop-up window 430 from the screen and the user will see the previous screen 300 again.

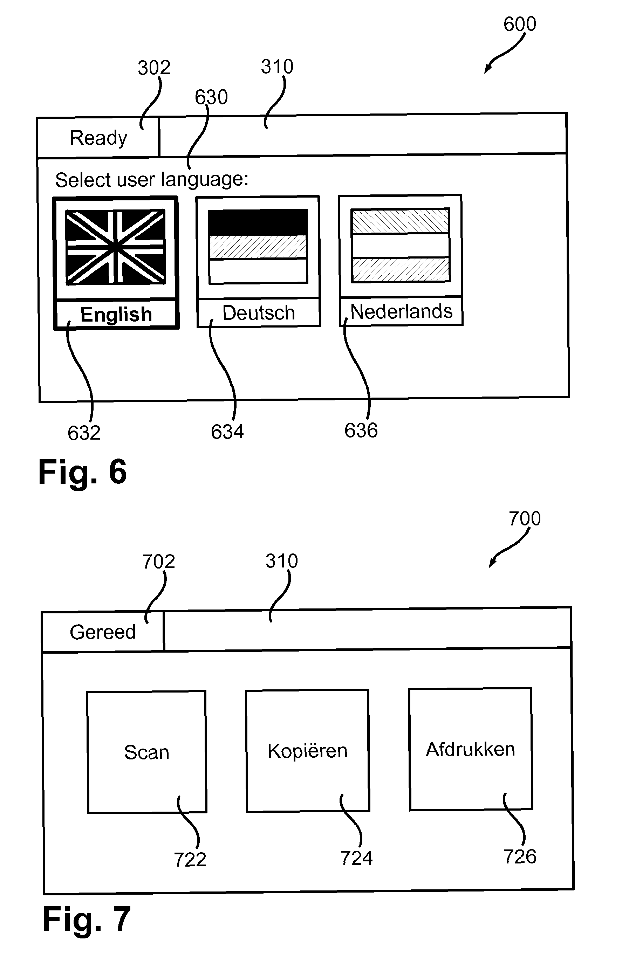

The user instructs the device 220 through the user interface to configure the device 220 (not shown in the figures). One of the configurations is the language of the user interface. When the user instructs the device 220 to configure the user interface language, the user interface displays a language selection screen 600. The language selection screen 600 shows a text string "Select user language" to guide the user what to do and shows all languages as available on the device 220 (for example stored in the persistent storage 120). Buttons 632, 634, and 636 allow the user to select respectively English, German, or Dutch as the user interface language. Operating one of these buttons will make the user interface to dynamically load the text strings for the selected language and show any subsequent screen in the selected language. For example, if the language selection screen 600 is closed (automatically after the user has selected a language or manually by some confirmation button or close button on the screen), a next screen 700 that is shown, for example the idle screen 300 that was shown previously, is displayed (figure 7) in the new language. If the user selected Dutch, the idle screen will be shown with all text widgets showing Dutch text strings instead of English text strings. The status message 702 will show "Gereed", and the operation buttons 722, 724, and 726 will show "Scan", "Kopiëren", "Afdrukken" respectively.

Alternatively, if the user has selected only one language to be installed, the device 200 may automatically switch the configured user interface language to the newly installed language after the text strings of the selected language have been stored in the persistent storage 120.

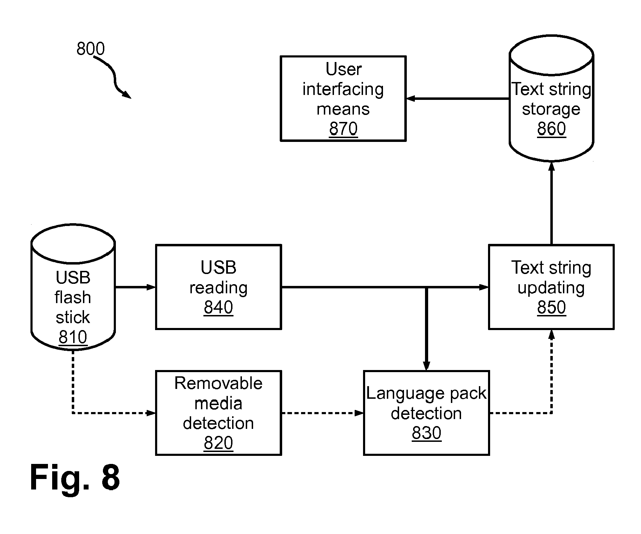

Typically the above described behaviour will be implemented by program code running on the CPU 118. The USB memory stick 210, 810 (figure 8) is inserted into a USB port of the device 220 that is connected to a USB host. The USB host allows the CPU to communicate with the USB memory stick 810. The operating system running on the device 220 will automatically detect that a USB Mass Storage device has been connected through a software routine 820 for the detection of removable media. The dashed arrows in figure 8 show modules triggering each other. The solid arrows show the flow of data. The operating system is configured to automatically mount the USB memory stick 210, 810 allowing the operating system and the user interface to access data on the USB memory stick 810 through the USB reading routine 840. After the USB memory stick 810 has been mounted the language pack detection routine 830 is triggered. This routine 830 will access the USB memory stick 810 and tries to determine whether it contains a language pack. The language pack detection routine 830 may use one or more methods to make this determination. For example, a media ID of the USB memory stick 810 may be checked, the presence of a file with a file name matching a specific pattern may be checked, the path of such a file may be checked, the format of such a file may be checked, the structure of such a file may be checked, content of such a file may checked, and it may be checked that such file has been properly, digitally signed.

If the language pack detection routine 830 detects the presence of a language pack, the text string updating routine 850 is triggered. The USB memory stick 810 is accessed through the USB reading 840, and it is determined what languages the language pack contains. Alternatively, different languages may be stored on the USB memory stick 810 in separate files. The user interface displays the languages available on the USB memory stick 810 to the user (figure 4 and 5). After the user has selected the languages and indicated he is done selecting, the text string updating routine 850 reads all text strings from the language pack that have a language identifier that corresponds to the languages selected by the user. The text strings read are stored in a text string storage 860 in the device 220. This text string storage 860 is preferably on the persistent storage 120.

The text string storage 860 may comprise resource files, a text string database, plain text files, XML files, or anything that allows for the storing of the text strings together with information identifying the language of the text strings and a text string identifier that allows the user interface to match the text strings in the text string storage 860 to textual widgets in the user interface.

The user interface means generate the user interface and access the text string storage 860 for retrieving the text strings for the language set as the user interface language and display the textual widgets with the retrieved text strings.

The whole process of storing the text strings from the USB memory stick 810 in the text string storage 860 and subsequently retrieval of these text strings by the user interface after the user has changed the user interface language to the language newly installed in the text string storage 860 is performed dynamically and does not require the restart of the program code.

A further advantage of the invention is that the device 220 is not required to run untrusted code from an untrusted external storage device 210, 810 to update the available user interface languages. All executable code required to update the languages is already in the device 220.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. Device comprising user interfacing means for presenting a user interface to a user, the user interface comprising at least one textual widget arranged to reproduce a text string with a preconfigured text string identifier, the device also comprising a text string storage for storing the text string, a text string identifier associated with the text string for associating the text string with the textual widget, and a language identifier associated with the text string;
the device further comprising:
- storage medium reading means for reading information stored on a storage medium;
- storage medium detection means for detecting a storage medium being inserted in or connected to the storage medium reading means;
- language pack presence detection means for detecting a language pack on the storage medium upon the storage medium detection means detecting a storage medium being inserted or being connected, the language pack comprising an import text string, an import text string identifier associated with the import text string, and an import language identifier associated with the import text string; and
- text string storage update means configured to insert in the text string storage the import text string and associate with the inserted import text string a language identifier derived from the import language identifier.

2. Device according to claim 1 further comprising a language configuration, the language configuration configurable by a user, and
wherein the user interface means are arranged to retrieve from the text string storage a text string with a text string identifier corresponding to the preconfigured text string identifier and a language identifier corresponding to the configured language.

3. Device according to claim 1 or 2 wherein:
- the user interfacing means is configured to present in the user interface a language selection widget for selecting a language corresponding to a language identifier comprised in the language pack, upon the language pack presence detection means detecting the language pack, and
- upon the user selecting a language in the language selection widget, the text string storage update means insert the text strings from the language pack that have associated with them a language identifier corresponding to the language selected by the user into the text string storage.

4. Device according to claim 1, 2, or 3 wherein the text string storage update means is configured to replace a text string in the text string storage with the import text string if the associated text string identifier and the associated language identifier of the text string correspond to the import text string identifier and the language identifier associated with the import text string.

5. Device according to claim 1, 2, or 3 wherein:
- the text string storage is configured to store the inserted text string with information identifying the inserted text string as having been inserted, and
- the user interfacing means is further configured to retrieve for the textual widget, if present a text string that has been identified as having been inserted, or if such text string is not present a text string that has not been identified as having been inserted.

6. Device according to any of claims 1-5 wherein a text string with a predetermined language identifier also represents the text string identifier.

7. Device according to any of claims 1-6 wherein the device comprises a reprographic device.

8. Method for updating the user interface language of a device, comprising:
- detecting a storage medium being inserted in or connected to storage medium reading means;
- upon detecting a storage medium being inserted or connected, accessing the storage medium and checking for the presence of a language pack;
- reading from the language pack:
- an import text string,
- an import text string identifier associated with the import text string, and
- a language identifier associated with the import text string;
- inserting in a text string storage the import text string;
- associating with the inserted import text string a text string identifier based on the import text string identifier associated with the import text string;
- associating with the inserted import text string a language identifier based on the language identifier associated with the import text string.

9. Method according to claim 8 further comprising the steps of:
- the user interface means prompting the user for a user interface language;
- receiving a user interface language selection;
- the user interface means retrieving from the text string storage a text string with:
- a text string identifier corresponding to a preconfigured text string identifier of a textual widget, and
- a language identifier corresponding to the selected user interface language.

10. Method according to claim 8 or 9 further comprising the step of executing user interface computer-program code on a processor comprising code for displaying a textual widget in the user interface, the method further comprising:
- the user interface computer-program code being executed before the step of receiving the user interface selection and causing the textual widget to display the associated text string in a first language according to a first language identifier, and
- the user interface computer-program code being executed after the step of receiving the user interface selection and causing the textual widget to display the associated text string in the language according to the user interface language selection; and
wherein the user interface computer-program code is not restarted, but is being executed continuously between these two steps.

11. Method according to claim 8, 9, or 10 wherein:
- the text string storage storing the inserted text string with information identifying the inserted text string as having been inserted, and
- the user interfacing means retrieving for the textual widget, if present a text string that has been identified as having been inserted, or if such text string is not present a text string that has not been identified as having been inserted.

12. Method according to any of claims 8-11 wherein a text string with a predetermined language identifier also represents the text string identifier.

13. Method according to any of claims 8-12 executed on a processor comprised in a reprographic device.

14. Computer-program product embodied on a non-transitory computer readable medium and configured to execute a method according to any of claims 8-13 when executed on a processor.

15. A non-transitory data carrier having stored thereon the computer-program product according to claim 14
